# FASCICULE DE BREVET EUROPEEN

(11) **EP 3 634 663 B1**
(45) Date de publication et mention de la délivrance du brevet: **04.08.2021**
(21) Numéro de dépôt: 18740267.2
(22) Date de dépôt: 08.06.2018
(51) Int. Cl.: B21J 15/04, B21J 15/28, F16B 19/10

(54) **OUTIL DE POSE D'UNE FIXATION AVEUGLE, PROCÉDÉ DE POSE ET FIXATION AVEUGLE ADAPTÉE**
WERKZEUG UND VERFAHREN ZUM SETZEN EINES BLINDBEFESTIGUNGSELEMENTS UND GEEIGNETES BLINDBEFESTIGUNGSELEMENT
SETTING TOOL FOR A BLIND FASTENER, SETTING METHOD AND SUITABLE BLIND FASTENER

(30) Priorité: 09.06.2017 FR 1755177
(43) Date de publication de la demande: 15.04.2020
(73) Titulaire: Eris, 31130 Flourens (FR)
(72) Inventeur: AURIOL, Pierre, 31500 Toulouse (FR); MARQUEZ, Jean-Luc, 31560 Saint Leon (FR); BRANDON, Vincent, 31130 Balma (FR); JEHENNE, Bertrand, 31570 Sainte Foy d'Aigrefeuille (FR)
(74) Mandataire: Godard, Xavier
(86) Numéro de dépôt international: PCT/FR2018/051338
(87) Numéro de publication internationale: WO 2018/224793

(56) Documents cités:
- WO-A1-2013/043673
- US-A1- 2012 263 556
- US-A1- 2013 061 452

## Description

### DOMAINE D'APPLICATION DE L'INVENTION

La présente invention a trait au domaine des fixations aveugles et notamment aux outils de pose permettant d'assurer leur pose dans les meilleures conditions.

### DESCRIPTION DE L'ART ANTÉRIEUR

Jusqu'à présent, la majorité des structures primaires aéronautiques (comme le fuselage, les ailes, les empennages, etc...) est assemblée par des liaisons vissées et/ou serties. Les vis et les fixations dites « lockbolts » utilisées sont caractérisées par des têtes « flush » qui ne désaffleurent que très peu de la structure et ne présentent pas d'empreinte en creux.

Le domaine des fixations aéronautiques doit néanmoins aujourd'hui pouvoir s'adapter à de nouvelles demandes concernant les assemblages de structures aéronautiques. L'utilisation des matériaux composites dans les zones structurales primaires impose la conception de nouvelles fixations structurelles aux performances mécaniques élevées sans endommagement du matériau composite. De plus, les cadences de production élevées imposent de recourir à l'automatisation de l'assemblage de structures primaires, telles que des tronçons de fuselage, ou des jonctions voilure/fuselage. Les avionneurs se tournent donc à présent vers des fixations de type «aveugle» et «mono-côté» ou «one-side» pour assurer les jonctions primaires c'est-à-dire à fortes contraintes des assemblages aéronautiques. De par leur conception, la pose des fixations aveugles présente l'avantage d'être relativement automatisable. Toutefois, elle requiert des moyens additionnels afin de ne pas endommager les matériaux composites accueillant lesdites fixations qui doivent être aérodynamiques et viables.

Une fixation aveugle est classiquement composée d'une tige centrale - ou vis - permettant, par la rotation ou la traction de celle-ci, de déformer une extrémité d'un corps externe du côté aveugle de l'assemblage afin de former un bulbe. Ce corps externe est enfilé sur la tige et peut être monobloc ou composé de plusieurs portions dont une portion mobile déformable.

Une fixation aveugle présente donc l'intérêt de s'installer dans un alésage en n'ayant accès qu'à un seul côté de l'assemblage. Le corps externe comprend une tête venant en appui contre l'assemblage du côté accessible. La tige est classiquement préformée d'une gorge de rupture de sorte qu'une fois un seuil de contrainte prédéfini atteint, la tige casse. Cette caractéristique évite que la tige ne reste en saillie, une fois la fixation posée.

L'emploi de fixations aveugles sur des structures primaires externes soulève néanmoins la problématique du contrôle de l'installation sans avoir accès au côté aveugle. On distingue une bonne installation d'une mauvaise, notamment par le niveau de compression induit dans l'assemblage. La bonne formation du bulbe et la non déformation de la tête constituent également des critères.

La tension installée dans l'assemblage (contrainte en compression dans l'assemblage et en traction dans la fixation) doit être d'au moins 50% de la limite à rupture théorique en traction axiale de la fixation. Par exemple, pour une fixation dont la limite à rupture théorique en traction est 1335 daN, la tension installée doit être au minimum de 667 daN. Le contrôle d'une bonne installation, donc d'un bon niveau de compression des tôles, doit pouvoir être mis en place dans l'installation d'une fixation aveugle.

Un autre paramètre est que le deuxième palier à savoir la limite élastique de la fixation doit être égale à 75% de la limite à rupture théorique en traction axiale.

De plus, les fixations aveugles structurales classiques disposent généralement d'une série d'empreintes (cruciformes, crantage, pour les plus communes) sur la tête du corps externe permettant de réaliser les fonctions de maintien durant la pose et parfois de contrôle. L'ensemble de la fixation est maintenu immobile par la partie fixe de l'outillage de pose, par l'intermédiaire desdites empreintes. Toutefois, ce type d'empreintes a un impact aérodynamique important qu'il est nécessaire de prendre en compte lorsque ces fixations sont destinées à des structures aéronautiques externes. Autrement dit, l'installation d'une fixation aveugle peut se faire au détriment des qualités aérodynamiques (empreinte aérodynamique, traînée) et cosmétiques (aspect visuel après peinture) de la tête de la fixation.

Les fixations aveugles à tête fraisée disponibles sur le marché à l'heure actuelle, présentent ainsi diverses empreintes en creux nécessaires à la pose de la fixation. Il existe également des fixations aveugles présentant des empreintes en saillie.

Une alternative à la présence d'empreintes est décrite dans le document US2282711. Ce document décrit une fixation aveugle avec un corps externe comprenant une tête équipée d'une portion en saillie mais détachable. La tête présente une géométrie qui lui permet de coopérer avec un outil pour être maintenue durant la pose. Une fois la fixation posée et la tige cassée, la portion de tête en saillie est ensuite détachée par l'application d'un effort de torsion sur la tête.

Le document WO2013043673, sur lequel se base le préambule des revendications 1 et 11, décrit un élément de fixation aveugle comprenant un boulon central, un corps et un élément de retenue aveugle (ou gaine) placé sur le boulon central, pouvant être inséré à travers une ouverture, le mouvement du boulon central par rapport au corps entraînant un accroissement de la surface de contact avec une surface arrière. L'élément de fixation comprend une extension du corps dotée d'une surface de serrage et d'une contre dépouille formée entre le corps et la surface de serrage, laquelle est éventuellement conçue pour se rompre lorsqu'on applique un couple égal à la somme du couple minimum de mise en place spécifié par l'application et du couple de tolérance de fabrication maximal de rupture pour la contre-dépouille.

Dans ce deuxième document, il est également décrit un procédé d'installation de fixation qui utilise la partie de tête détachable pour vérifier le couple installé en appliquant une torsion sur la partie détachable et en séparant l'extension du corps en cassant la partie fragilisée à cet effet. La torsion appliquée est alors plus grande que le couple minimum installé spécifié pour la fixation.

Si la fixation installée tourne dans l'ouverture avant que l'extension ne soit séparée du corps, la fixation est retirée et remplacée. Néanmoins, l'utilisation d'un couple installé dans la fixation comme paramètre de vérification d'un bon assemblage peut ne pas être considérée comme suffisante. En effet, le couple installé dans la fixation dépend des conditions de frottement variable selon les matériaux assemblés, de la présence éventuelle de lubrifiant ou de tout matériau s'intercalant entre la fixation et l'assemblage. Ce couple installé dépend également du diamètre du bulbe obtenu par déformation.

Le document décrit également un procédé de dressage de l'élément de fixation mis en place, comprenant un usinage à travers la surface supérieure de l'élément de fixation, le long d'un axe longitudinal du boulon central de l'élément de fixation et de l'extension allant du corps externe de l'élément de fixation jusqu'à l'intersection avec la contre dépouille formée entre le corps externe et l'extension, pour retirer l'extension.

Le document EP2505855 décrit une fixation aveugle comprenant un corps avec à une première extrémité une face apparente, traversée par un alésage recevant une tige dont une première extrémité vient en saillie par rapport à la face apparente et dont l'autre extrémité comprend une tête apte à déformer une zone de déformation lorsque la tige se translate, la face apparente comprenant des moyens de maintien pour immobiliser en rotation la fixation aveugle par rapport à un outil utilisé pour entraîner en rotation la tige, lesdits moyens de maintien comprenant au moins un ergot rapporté au niveau de la face apparente et venant en saillie par rapport à cette dernière. Cet ergot de la fixation est relié au corps par une zone de jonction apte à se rompre lorsque l'ergot subit un effort supérieur à un seuil donné. Un mode de réalisation préféré propose une configuration à plusieurs ergots pour répartir les efforts. De même, un outil de pose coopérant avec lesdits ergots est décrit.

Le document US 2012/263556 A1, sur lequel se base le préambule de la revendication 4, décrit aussi un outil de pose.

Il est difficile dans ce cas de garantir la rupture de l'ensemble des ergots. La variabilité du contre-couple à l'installation fait que l'ergot ou les ergots doivent faire l'objet d'un dimensionnement spécifique difficile à définir. En outre, la pluralité d'ergots requiert la gestion d'autant de pièces. Enfin la translation de la tige définit un positionnement aléatoire de la zone de rupture de la tige selon les épaisseurs variables des assemblages. Compte tenu de la variation des épaisseurs à serrer, il est impossible de ne pas prévoir une phase d'arasage systématique.

En effet, bien que de telles fixations ne présentent pas d'empreintes, elles peuvent a contrario présenter des volumes en saillie résultant de la rupture. Ainsi, que ce soit pour cette fixation ou pour celles décrites dans les documents précédemment cités, les aléas liés à la rupture en ce qui concerne la partie de fixation restant en place et en saillie par rapport à la surface des éléments à assembler, peuvent requérir la mise en place d'une phase d'usinage à des fins de suppression de toute saillie.

### BRÈVE DESCRIPTION DE L'INVENTION

Partant de cet état de fait, la demanderesse a mené des recherches ayant pour objet un outil de pose d'une fixation aveugle telle celle décrite à savoir comprenant une portion de tête de corps externe détachable afin de profiter des avantages d'une telle fixation sans en avoir les inconvénients.

Ces recherches ont abouti à la conception et à la réalisation d'un outil de pose nouveau permettant la pose de telles fixations dans de meilleures conditions.

L'outil de l'invention assure
la pose d'une fixation aveugle comprenant une tige sur laquelle est enfilé un corps externe,
le corps externe comprenant une tête et une portion détachable reliée à ladite tête au moyen d'une portion amincie de corps externe,
le corps externe comprenant une ou plusieurs parties,
ledit corps externe comprenant une portion déformable à des fins de création d'un bulbe sous l'action de la tige,
l'action de la tige pouvant être par rotation ou par traction,
la tige comprenant une gorge de rupture qui casse à partir d'un seuil de contrainte prédéfini,
le procédé de pose consistant à réaliser les opérations suivantes :
- positionnement de la fixation dans un trou traversant un assemblage,
- maintien de la fixation dans le trou,
- création d'un bulbe à des fins de fixation de l'assemblage,
- rupture de la tige,
- rupture de la portion détachable de la tête du corps externe.

L'outil de pose est remarquable en ce qu'il comprend un organe de pose coopérant avec ladite tige et un organe de vérification de pose coopérant avec ladite tête du corps externe,
- l'organe de pose ayant une action sur la tige à des fins de création du bulbe jusqu'à rupture de la tige au niveau de la gorge de rupture,
- l'organe de vérification de pose retenant la portion détachable de la tête du corps externe durant l'action de l'organe de pose sur la tige,
- l'organe de vérification soumettant la portion détachable de la tête du corps externe à une contrainte en torsion par un entraînement en rotation de type à choc qui permet la production d'un effort dynamique important produit dans un temps très court en soumettant ladite portion détachable de la tête du corps externe à au moins un impact dans un sens de rotation à des fins de rupture de la portion amincie du corps externe, la rupture résultant d'une bonne installation et l'absence de rupture résultant d'une mauvaise installation.

Un tel outil de pose permet de mettre en œuvre un contrôle après pose (détrompeur) de la bonne installation selon les critères recherchés d'une telle fixation aveugle sans empreinte en s'assurant de la bonne mise en place de la fixation par rupture de la partie détachable de la tête du corps externe.

Un tel outil permet également une pose dans de bonnes conditions en ce qui concerne la rupture des parties détachables. La technologie d'entraînement par choc évite toute mise en saillie requérant une opération de dressage ou d'arasage. En effet, un entraînement à choc va assurer une rupture franche de la partie détachable. De plus, en soumettant la partie détachable de la tête du corps externe à une contrainte en torsion ponctuelle et selon un couple très important, cette technologie d'entraînement permet de mieux prendre en compte la tension installée dans l'assemblage et donc de mieux s'assurer de cette dernière par la rupture de la partie détachable.

L'absence visuelle d'élément en saillie garantit ainsi une bonne pose. A contrario, si la partie détachable de la tête du corps externe reste présente, la pose n'a pas été réalisée dans de bonnes conditions telle une mauvaise tension installée, un bulbe mal formé ou une tête déformée. Il est ainsi possible d'assurer une vérification visuelle de bonne pose pour chaque fixation depuis l'extérieur de l'assemblage.

L'entraînement par choc est connu dans le domaine des boulonneuses dites clés à chocs. Dans certains modes de réalisation, il implique une notion d'angle de rotation « dans le vide » qui permet de garantir un choc ou plutôt un effort dynamique minimum produit dans un temps très court. Ce moyen de mise en mouvement est utilisé pour des opérations de vissage et de dévissage de boulons nécessitant une grande puissance. Il n'est pas connu comme moyen de rupture d'un élément à des fins de vérification de la bonne pose d'une fixation. Il s'agit donc de l'utilisation nouvelle d'un moyen connu. De plus, l'entraînement par choc n'est pas conseillé dans les applications aéronautiques car la contrainte dans la fixation est mal maîtrisée du fait de l'utilisation de chocs.

Un outil réunissant un organe de pose agissant sur une tige de fixation aveugle et un organe de vérification consistant en un moyen d'entraînement à choc dont le but est d'obtenir une rupture, n'est pas non plus connu.

Selon une autre caractéristique particulièrement avantageuse de l'invention, l'organe de pose assure une rotation de la tige à des fins de création par vissage du bulbe jusqu'à rupture de la tige au niveau de sa gorge de rupture. La mise en œuvre d'une contrainte par torsion évite le déplacement axial en translation de la tige et assure un positionnement précis de la zone de rupture au plus près de la surface de l'assemblage et malgré les variations possibles de l'épaisseur de l'assemblage. Si une telle caractéristique participe à l'obtention d'une fixation posée avec une empreinte aérodynamique faible et un aspect cosmétique lisse, elle génère une nouvelle difficulté. En effet, la rupture de la portion de corps externe reliant la partie détachable au reste du corps externe n'est en rien évidente. Lors de la première phase de vissage, le corps externe doit être capable de ne pas tourner. La partie détachable de la tête du corps externe supporte alors un contre-couple. Or, les aléas d'une fixation vissée (du fait des matériaux, du frottement, etc...) font que le couple transmis au corps externe lors du serrage par vissage (contre-couple) peut varier de 30 à 70 % (constituant ainsi un défaut de répétabilité).

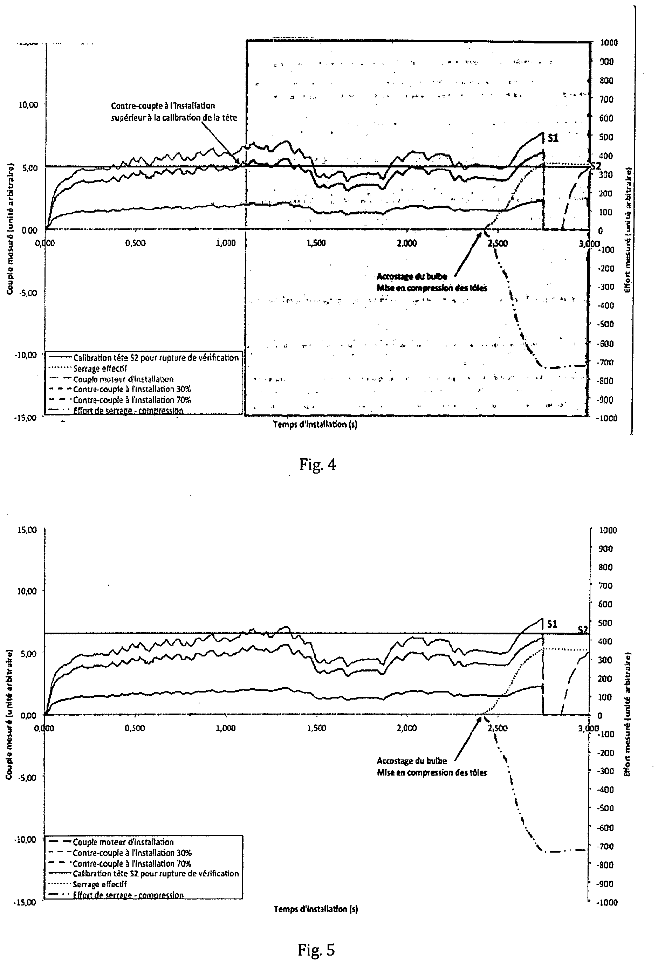

La variabilité des couples de pose et le problème du glissement lors de la seconde rupture sont des problèmes techniques qui n'ont pas été soulevés et a fortiori résolus par l'art antérieur.
La demanderesse a mené des recherches afin d'obtenir l'effet technique recherché. Les courbes illustrées par le dessin de la figure 4 représentent des efforts lors d'une pose.

Les deux courbes représentées en tirets interrompus courts et situés sous la courbe supérieure sont les deux courbes représentant les aléas extrêmes du contre-couple subi par la portion amincie reliant la portion détachable à la tête du corps externe. Ces deux courbes dépendent du couple moteur représenté par ladite courbe supérieure.

S1 correspond au seuil de contrainte à partir duquel la tige se casse et S2 correspond au seuil de contrainte à partir duquel la portion amincie de liaison entre la portion détachable et la tête du corps externe se casse.

On voit bien sur cette courbe le premier couple moteur destiné à obtenir un effort de serrage, la casse de la tige au niveau de S1, son arrêt et le deuxième couple moteur destiné à obtenir la casse de ladite portion amincie au niveau de S2 si le serrage a bien été réalisé.

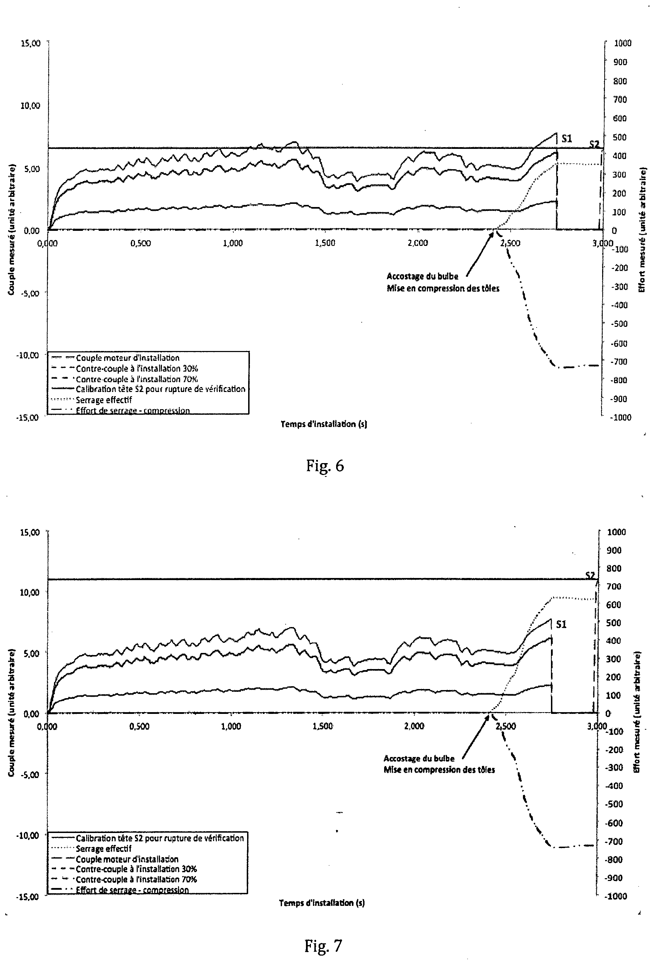

Il faut donc avoir une épaisseur de matière pour la portion amincie de liaison (entre la partie détachable de la tête du corps externe et ladite tête du corps externe) suffisante pour résister au contre-couple subi par le corps externe et ne pas casser malgré cette variation de couple de serrage avant rupture de la tige (cette casse prématurée étant représentée par la zone noircie). Par contre, si le couple S2 nécessaire est trop élevé, c'est à dire que la portion amincie de liaison reliant la partie détachable de la tête du corps externe à ladite tête du corps externe est trop surdimensionnée, il n'est plus possible de la détacher. On peut alors obtenir les courbes illustrées par la figure 5.
On comprend que le surdimensionnement de la portion amincie conduit à une incapacité à la casser si le moyen assurant la deuxième phase de vérification n'est pas adapté. Un phénomène de glissement se produit.
D'où la solution d'un entraînement à choc c'est-à-dire par à-coups qui permet la production d'un effort dynamique et d'obtenir les courbes des figures 6 et 7 illustrant deux hypothèses.

Pour une hypothèse où le serrage effectif (courbe en pointillés) est inférieur au couple d'installation, on obtient la courbe illustrée par le dessin de la figure 6.

Pour une hypothèse où le serrage effectif est supérieur au couple d'installation, on obtient la courbe illustrée par la figure 7.

L'exploitation d'un entraînement à choc sur la portion détachable de la tête du corps externe pour la deuxième phase qui va s'appliquer à la portion amincie de liaison reliant la partie détachable à la tête du corps externe, permet la production d'un effort dynamique. Cet effort important produit dans un temps très court permet, tout en ayant un contre-couple résistant lors de la première phase de vissage, de réaliser une rupture du corps externe lors de la phase de vérification que le serrage effectif soit inférieur ou supérieur au couple d'installation.

La mise en œuvre d'un entraînement à choc est alors particulièrement avantageuse en ce qu'elle permet de disposer de plus de marge sur la partie détachable de la tête du corps externe en particulier dans le cas où les aléas d'une fixation vissée font que la variation du contre-couple résultant sur ladite tête est non négligeable.

Un léger surdimensionnement de la portion amincie de liaison de la partie détachable à ladite tête permet de résister au contre-couple résultant lors de la pose sur ladite tête du corps externe. La vérification de la pose au moyen d'un choc sur une zone amincie, permet de réaliser la rupture de la partie détachable de la tête du corps externe tout en assurant la tenue (sans rupture) de cette partie détachable lors de la phase préalable de pose.

Par ailleurs, une rupture par choc d'une portion métallique amincie permet l'obtention d'une rupture franche sans copeaux ni bavures.

Ainsi, la réunion des deux organes de pose et de vérification de pose sur un même outil nécessite la résolution de plusieurs problèmes techniques inédits :
- le maintien en position de l'organe de vérification de pose pendant la mise en mouvement de l'autre,
- la gestion des moyens de mise en mouvement susceptibles d'entrainer selon un mouvement sans à-coups et selon un mouvement avec à-coups c'est-à-dire à choc,
- ne pas détacher la partie détachable de la tête du corps externe qui subit un contre-couple important lors de la pose,
- autoriser le détachement de ladite partie détachable de la tête du corps externe lors de la vérification si la fixation est bien posée,
- la gestion de deux éléments détachables (la partie détachable de tige et la partie détachable de tête).

Le moyen de contrôle peut être ainsi mis en place par le contrôle visuel de la fixation qui présente, après pose, un aspect aérodynamique et cosmétique, lisse, libre de toute empreinte.

Selon une autre caractéristique particulièrement avantageuse de l'invention, l'outil de pose est remarquable en ce qu'il comprend au moins un module de commande numérique commandant les différents mouvements et surveillant les couples atteints pour les mouvements des deux organes à des fins de mise en œuvre d'une bonne installation et de mise en œuvre d'une vérification de cette dernière. L'exploitation d'une commande numérique de surveillance de deux couples pour la mise en œuvre d'un procédé de pose d'une fixation aveugle est novatrice.

Comme expliquée plus haut, la bonne installation d'une fixation aveugle est caractérisée notamment par un niveau de tension installée au moins égal à 50% de la limite de rupture théorique de la pièce.

Le principe de double gorge (une gorge de rupture sur la tige et une portion amincie de corps externe) et donc de double rupture des parties détachables de la fixation mise en oeuvre par l'outil de l'invention permet de s'affranchir d'empreintes de serrage sur la tête de fixation, gênantes au point de vue cosmétique et aérodynamique.

De plus, cette double rupture permet de contrôler la bonne installation de la fixation au moyen de la rupture sur la tête du corps externe de la fixation, rupture qui est calibrée.

Un tel outil peut ainsi garantir le serrage de l'assemblage suivant les spécifications de standard de la fixation en respectant les contraintes suivantes :
- accès restreint à la fixation, côté tête seul accessible,
- empreinte aérodynamique faible (saillie 150 microns maximale recherchée),
- aspect cosmétique lisse (dit flush),
- pose robotisable.

D'autres caractéristiques particulièrement avantageuses viennent compléter, associées ou non, les caractéristiques ci-dessus décrites de l'invention :
- le corps externe de la fixation est en deux parties avec une partie mobile se déformant sous l'action de la tige à des fins de création du bulbe ;
- l'organe de pose est mis en mouvement par un moteur électrique ou pneumatique ;
- l'organe de vérification de pose est mis en mouvement par un moteur électrique ou pneumatique ;
- l'outil comprend un seul moteur entraînant l'organe de pose et l'organe de vérification de pose de manière distincte au moyen d'un sous-ensemble de réduction adapté ;
- l'organe de pose entraîne l'organe de vérification de pose au moyen d'un sous-ensemble de réduction adapté.

Selon une autre caractéristique particulièrement avantageuse de l'invention, l'organe de vérification comprend un angle de rotation « dans le vide » qui est compris entre 60° et 240 °. Cet angle va au-delà d'un simple jeu fonctionnel et est défini pour garantir le choc ou plutôt un effort dynamique minimum produit dans un temps très court.

On comprend que ces recherches ont abouti à la conception et à la réalisation d'un nouveau procédé mis en œuvre par ledit outil. Ainsi, un autre objet de l'invention concerne le procédé de pose de l'invention qui intègre une phase de vérification de pose.

Ce procédé de pose d'une fixation aveugle comprenant une tige sur laquelle est enfilé un corps externe,
le corps externe comprenant une tête et une portion détachable reliée à ladite tête au moyen d'une portion amincie de corps externe,
le corps externe comprenant une ou plusieurs parties,
ledit corps externe comprenant une portion déformable à des fins de création d'un bulbe sous l'action de la tige,
la tige comprenant une gorge de rupture qui casse à partir d'un seuil de contrainte prédéfini,
le procédé de pose consistant à réaliser les opérations suivantes :
- positionnement de la fixation dans un trou traversant un assemblage,
- maintien de la fixation dans le trou,
- création d'un bulbe à des fins de fixation de l'assemblage,
- rupture de la tige,
- rupture de la portion détachable de la tête,
est remarquable en ce qu'il comprend les opérations suivantes :
- entraîner sans à-coups la tige à des fins de création du bulbe jusqu'à rupture de la tige au niveau de la gorge de rupture tout en retenant la portion détachable de la tête du corps externe,
- entraîner en rotation à choc en produisant un effort dynamique important dans un temps très court, la portion détachable de la tête du corps externe pour exercer une contrainte en torsion à des fins de rupture de la portion amincie du corps externe, la rupture résultant d'une bonne installation et l'absence de rupture résultant d'une mauvaise installation.

Ce procédé peut être mis en œuvre par un tel celui décrit plus haut ou plusieurs outils.

Comme expliquée plus haut, la mise en œuvre d'un entraînement à choc est particulièrement avantageuse en ce qu'elle permet de disposer de plus de marge sur la partie détachable de la tête du corps externe en particulier dans le cas où les aléas d'une fixation vissée font que la variation du contre-couple résultant sur ladite tête est non négligeable.

Selon une autre caractéristique particulièrement avantageuse, la création du bulbe jusqu'à rupture de la tige au niveau de la gorge de rupture tout en retenant la portion détachable de la tête du corps externe, est réalisée par entraînement en rotation sans à-coups de ladite tige.

Selon une autre caractéristique particulièrement avantageuse, l'effort important est un effort correspondant à au moins deux fois l'effort nécessaire pour rompre la portion amincie de liaison reliant la portion détachable à la tête du corps externe et le temps très court est un temps inférieur à une seconde.

Un autre objet de l'invention concerne la fixation aveugle adaptée à un tel outil de pose.

Comme expliquée plus haut, cette fixation aveugle comprend une tige sur laquelle est enfilé un corps externe,
le corps externe comprenant une tête et une portion détachable reliée à ladite tête au moyen d'une portion amincie de corps externe,
le corps externe comprenant une ou plusieurs parties,
ledit corps externe comprenant une portion déformable à des fins de création d'un bulbe sous l'action de la tige,
la tige comprenant une tête et une portion détachable de la tête de tige reliée à ladite tête par une gorge de rupture qui casse à partir d'un seuil de contrainte prédéfini.

Selon l'invention, la fixation aveugle est remarquable en ce que ladite portion amincie du corps externe reliant la portion détachable de la tête à ladite tête est dimensionnée de façon à
- résister au contre-couple qu'elle subit lors de la création du bulbe par rotation de la tige jusqu'à la rupture de la gorge de rupture de la tige et
- casser lors d'un entraînement par choc si la fixation est bien installée.

Ce dimensionnement est conçu en tenant compte des matériaux utilisés.

Selon un mode de réalisation préféré mais non limitatif, la fixation est remarquable en ce que le corps externe est en titane et la tige est en inox ou en titane. Cette association de matériau permet d'obtenir les seuils de contrainte de rupture souhaités pour que la fixation soit bien installée par l'outil de l'invention et que cette installation puisse être vérifiée par le même outil.

Selon une autre caractéristique particulièrement avantageuse de l'invention, la portion détachable de la tête de la tige est préformée de façon à former un appui axial de sorte qu'un mouvement en translation s'appliquant à la portion détachable détachée de la tête de tige à des fins d'éjection, provoque un contact avec la portion détachable détachée de la tête du corps externe et sa propre éjection. L'éjection est ainsi simplifiée et plus facilement automatisable. Cette préformation peut prendre la forme de dimensions supérieures, de création d'un épaulement ou toute excroissance garantissant l'entraînement. La présence d'un épaulement sur la tige d'une fixation aveugle est connue. Néanmoins, cet épaulement présente la fonction nouvelle de mettre en œuvre l'éjection de la partie détachable du corps externe en même temps que celle de la tige.

Selon une autre caractéristique particulièrement avantageuse, la portion détachable de la tête du corps externe est constituée par une projection issue de la tête du corps externe, préformée pour prolonger l'âme creuse traversant le corps externe et présentant une zone de liaison annulaire avec la tête. Cette portion détachable n'est pas constituée par un ou des ergots. Dans la pratique la rupture proposée par la zone de liaison annulaire de la partie détachable est plus aisée et plus facile à reproduire qu'une rupture en simultané de plusieurs ergots.

Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés, donnant à titre d'exemple non limitatif, un mode de réalisation d'un outil de pose conforme à l'invention.

### BRÈVE DESCRIPTION DES DESSINS

La figure la est un dessin schématique d'une vue de côté en coupe d'une fixation aveugle;
La figure 1b est un dessin schématique d'une vue extérieure de face de la fixation de la figure la ;
La figure 1c est un dessin schématique d'une vue extérieure en perspective de la fixation de la figure la ;
Les figures 2a à 2f sont des dessins schématiques des vues de côté en coupe de l'outil et de la fixation de la figure la installée dans un assemblage et illustrant les étapes de l'opération de pose mise en œuvre par l'outil de l'invention ;
La figure 2g est un dessin schématique d'une vue de côté en coupe d'une fixation aveugle installée par l'outil de l'invention ;
La figure 2h est un dessin schématique d'une vue extérieure de face du côté accessible de la fixation une fois installée ;
La figure 3 est un dessin schématique d'une vue de côté en coupe d'une fixation aveugle conforme à l'invention ;
La figure 4 illustre les courbes de monitoring des paramètres d'installation dans le cas d'un serrage effectif inférieur au couple d'installation S1 - calibration dans la plage 30-70 % - contre couple ;
La figure 5 illustre les courbes de monitoring des paramètres d'installation dans le cas d'un serrage effectif inférieur au couple d'installation S1 - calibration hors plage 30-70 % - glissement ;
La figure 6 illustre les courbes de monitoring des paramètres d'installation dans le cas d'un serrage effectif inférieur au couple d'installation S1 - rupture au choc - pas de glissement ;
La figure 7 illustre les courbes de monitoring des paramètres d'installation dans le cas d'un serrage effectif supérieur au couple d'installation S1 - rupture au choc - pas de glissement.

### DESCRIPTION DES MODES DE RÉALISATION PRÉFÉRÉS

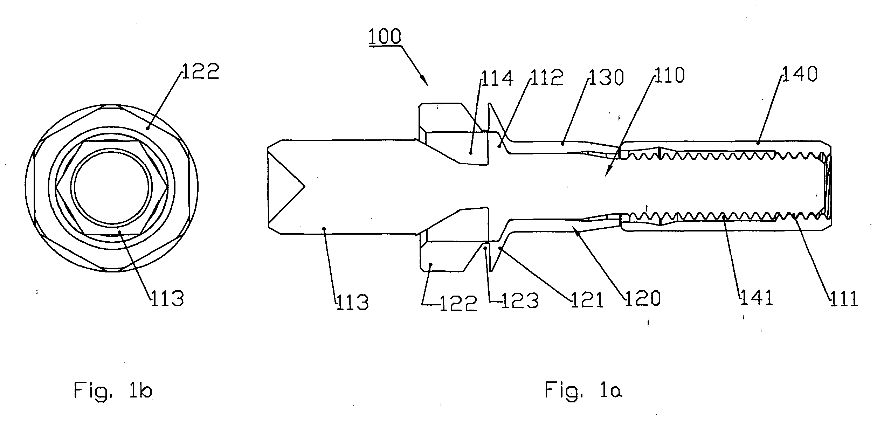

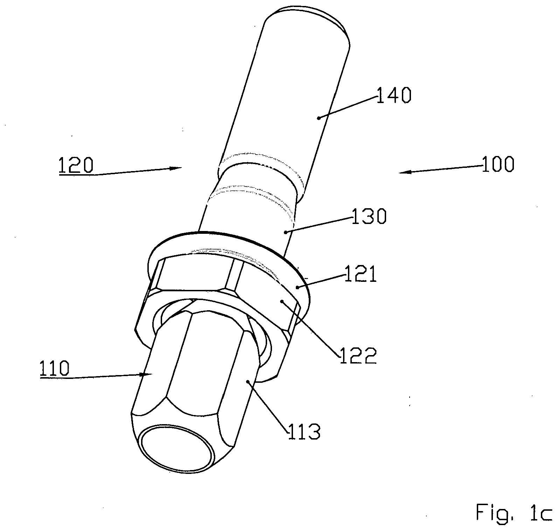

Comme illustrée sur les dessins des figures 1a, 1b et 1c, la fixation aveugle référencée 100 dans son ensemble comprend une tige 110 sur laquelle est enfilé un corps externe 120.

Le corps externe 120 est donc creux et comprend une tête 121 fraisée et équipée d'une portion détachable 122. Ce corps externe 120 comprend plusieurs parties :
- une portion fixe 130 équipée de ladite tête 121 et venant en appui sur la face accessible de l'assemblage à réaliser,
- une portion mobile et déformable 140 à des fins de création d'un bulbe sous l'action de la tige 110.

Pour ce faire, cette portion mobile et déformable 140 est préformée d'une âme creuse 141 traversante dont une portion 142 est taraudée. Une extrémité de la tige 110 est préformée d'une portion filetée 111 et vient se visser dans la portion taraudée 142 de la portion mobile et déformable 140.

Une portion annulaire amincie de liaison définie par une gorge de rupture 123 relie la portion détachable 122 à la tête 121 du corps externe 120. Cette portion amincie de rupture 123 du corps externe 120 casse à partir d'un seuil de contrainte prédéfini S2.

La tige 110 se positionne dans l'âme creuse du corps externe 120 et comprend une tête 112 de tige 110 fraisée et équipée d'une portion détachable 113, une portion amincie définie par une gorge de rupture 114 relie ladite portion détachable 113 à la tête 112 de tige 110. Cette portion amincie 114 de la tige casse à partir d'un autre seuil de contrainte prédéfini S1 inférieur ou supérieur à celui S2 défini pour la rupture de la portion amincie 123.

La portion détachable 113 de la tête 112 de la tige 110 est de diamètre moindre et en saillie par rapport à la portion détachable 122 de la tête 121 du corps externe 120.

Ces deux portions détachables 122 et 113 présentent selon le mode de réalisation non limitatif illustré, un profil extérieur hexagonal facilitant leur association à des outils présentant une empreinte adaptée. Bien entendu, d'autres profils dépareillés ou non sont possibles.

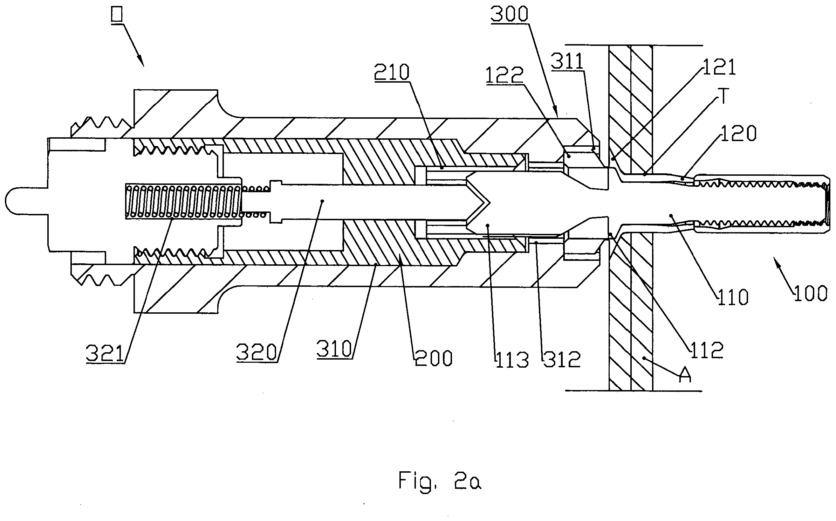

Comme illustré sur le dessin de la figure 2a, afin de réaliser la bonne pose et de s'assurer de cette dernière, un outil O vient coopérer avec la fixation 100 installée dans un trou T traversant et à rebord fraisé ménagé dans un assemblage A représenté selon le mode de réalisation non limitatif illustré par l'empilement de deux tôles. La fixation 100 est positionnée dans le trou T avec la tête fraisée 121 du corps externe 120 venant prendre appui sur le rebord fraisé du trou T.

Pour plus de clarté, seule l'extrémité de l'outil O est illustrée. Cette dernière est engagée sur l'extrémité en saillie de la fixation 100 du côté accessible de l'assemblage A.

L'extrémité de l'outil O réunit un organe de pose 200 coopérant avec la portion détachable 113 de la tête 112 de ladite tige 110 et un organe de vérification de pose 300 coopérant avec la portion détachable 122 de la tête 121 du corps externe 120.

L'organe de vérification de pose 300 comprend un corps adoptant une forme extérieure cylindrique avec une âme creuse 310 est également cylindrique et accueille en liaison pivot une portion de l'organe de pose 200.

L'âme creuse 310 débouche à l'extrémité du corps de l'organe de vérification 300 orientée vers la fixation 100. Cette extrémité est préformée d'une empreinte 311 avec laquelle coopère la portion détachable 122 de la tête 121 du corps externe 120 à des fins de retenue lors de la pose et d'entraînement lors de la vérification de pose.

Cette empreinte 311 est préformée en partie arrière centrale d'un évidement 312 permettant à la portion détachable 113 de la tige de venir coopérer avec la portion distale de l'organe de pose 200 qui est elle-même préformée d'une empreinte 210 disposée en retrait par rapport à l'empreinte 311 de l'organe de vérification 300.

Selon le mode de réalisation préféré mais non limitatif illustré, ledit organe de pose 200 comprend un pointeau éjecteur 320 venant exercer au moyen d'un ressort 321, une poussée axiale contre la portion détachable 113 lors de la phase d'éjection. Lors des phases de pose et de vérification de pose, le pointeau reste en position rentrée.

Selon un mode de réalisation préféré mais non limitatif, le procédé de pose consiste à réaliser les opérations suivantes :
- positionnement de la fixation 100 à l'extrémité de l'outil O puis positionnement de la fixation 100 dans un trou T traversant un assemblage A au moyen dudit outil O,
- maintien en position du corps externe 120 par l'outil O,
- création d'un bulbe à des fins de fixation de l'assemblage par rotation de la tige 110, rotation mise en œuvre par l'outil O,
- rupture de la portion détachable 113 de la tête 112 de la tige 110,
- rupture de la portion détachable 122 de la tête 121 du corps externe 120 à des fins de vérification de la bonne pose,
- évacuation des parties détachables 113 et 122.

Cette pose est décrite ci-après en association avec la succession des figures 2a à 2g.

Selon un autre mode de réalisation, la fixation 100 est installée dans le trou T avant que l'extrémité de l'outil O ne vienne coopérer avec elle.

Comme illustré sur le dessin de la figure 2a, l'outil de pose O vient coopérer avec l'extrémité en saillie de la fixation 100 de sorte que son organe de pose 200 coopère avec la portion détachable 113 de la tige 110 et que l'organe de vérification 300 coopère avec la portion détachable 122 du corps externe 120.

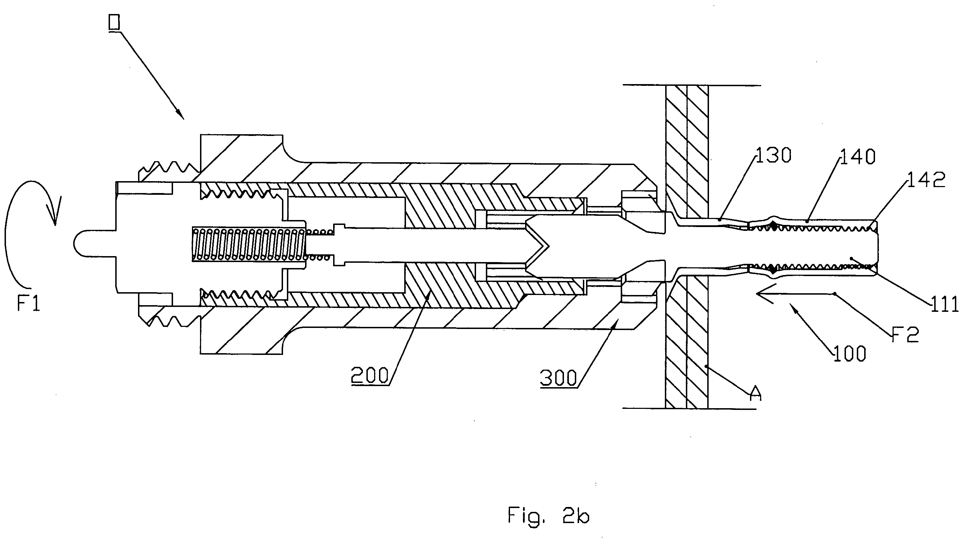

Comme illustré sur le dessin de la figure 2b, un mouvement de rotation F1 est imprimé à l'organe de pose 200 qui entraîne en rotation la tige 110. L'organe de vérification 300 reste fixe pendant cette rotation pour proposer un contre-couple. Du fait de la liaison hélicoïdale entre l'extrémité 111 de la tige 110 et la portion taraudée 142 de la portion mobile 140, la rotation de la tige 110 entraîne en translation F2 la partie mobile 140 du corps externe 120 vers la partie fixe 130. Les interactions de type frottement entre ladite tige 110 et ladite tête 121 du corps externe engendrent également un couple résistant en opposition au couple moteur d'installation sur ladite tige 110. Aussi, le contre-couple subi par la portion détachable 122 de ladite tête 121 peut varier dans une large plage.

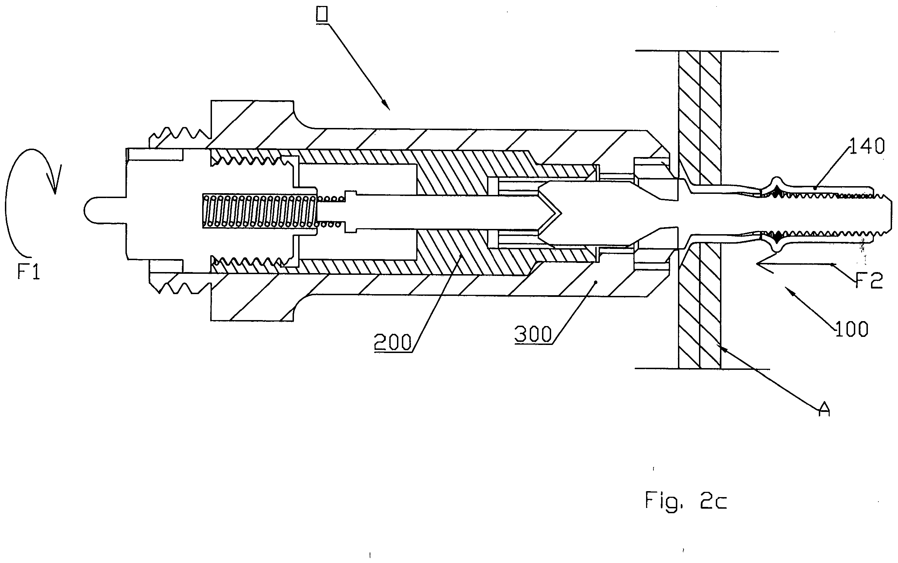

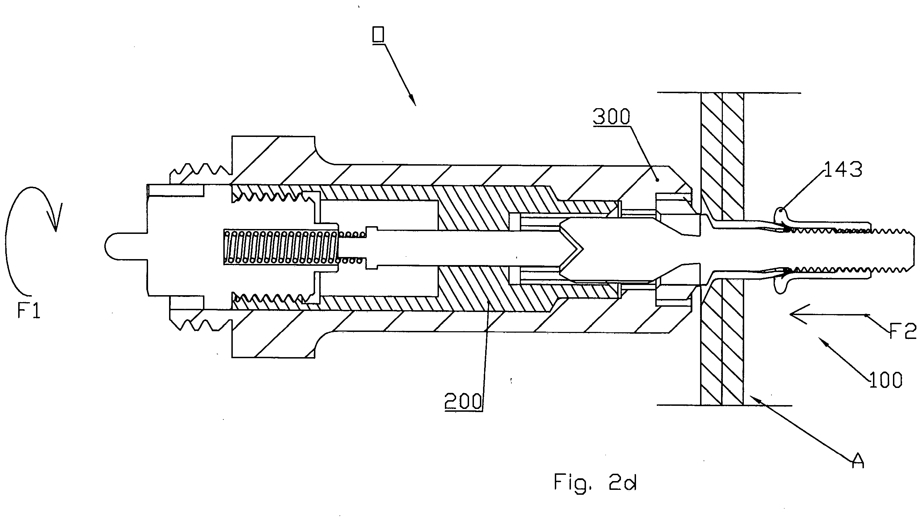

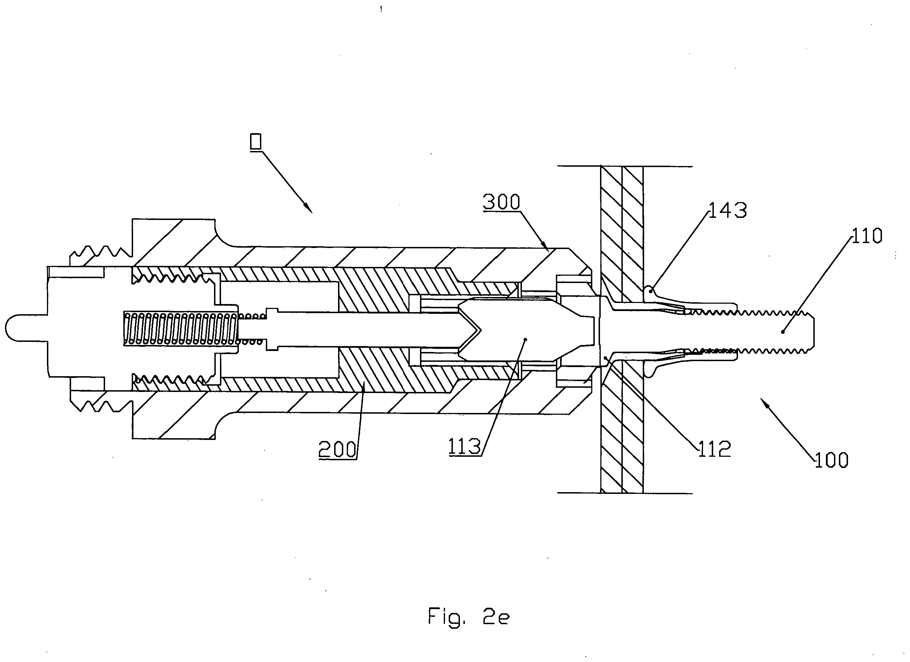

Comme illustrée sur les dessins des figures 2c et 2d, la poursuite du mouvement de rotation selon la flèche F1 conduit la partie mobile 140 à se déformer en formant progressivement un bulbe 143 qui va venir en contact avec le côté aveugle de l'assemblage A comme illustré sur le dessin de la figure 2e. Comme illustré, ce bulbe se forme complétement en l'air avant de venir serrer les pièces à assembler. Le couple nécessaire pour déformer le bulbe est transmis en grande partie au corps. Le contre-couple est donc élevé dès le début de la pose ce qui constitue une difficulté supplémentaire.

A ce stade, l'appui du bulbe 143 conduit la rotation à exercer un serrage créant une contrainte en torsion au niveau de la gorge de rupture 114 qui, après franchissement d'un seuil prédéfini S1, casse. La portion détachable 113 se détache alors de la tête 112 de la tige 110. La rotation selon la flèche F1 de la tige 110 cesse. La partie détachable 113 reste dans l'outil O.

Un mouvement de rotation (flèche F3) à chocs est alors transmis à l'organe de vérification 300 qui le transmet au corps externe 120 par l'intermédiaire de la partie détachable 122 selon un mouvement de rotation flèche F3. La partie amincie ou gorge de rupture 123 casse à partir du franchissement d'un seuil de contrainte S2. Si cette rotation a la conséquence illustrée à savoir une rupture de la partie amincie 123, la fixation 100 est considérée comme bien posée puisque la tension installée dans l'assemblage est jugée suffisante et qu'un état de surface lisse est obtenu.

Si cette rotation a la conséquence non illustrée d'une rotation de la fixation 100 dans le trou T, la fixation 100 est considérée comme mal posée puisque la tension installée dans l'assemblage n'est pas suffisante pour conduire à la rupture de la gorge 123. La fixation mal posée est alors retirée.
Pour ce faire, la fixation peut être détruite par perçage. La partie non cassée du corps externe peut alors servir de guide à des fins de centrage et/ou de prise de référence pour l'outil de perçage.

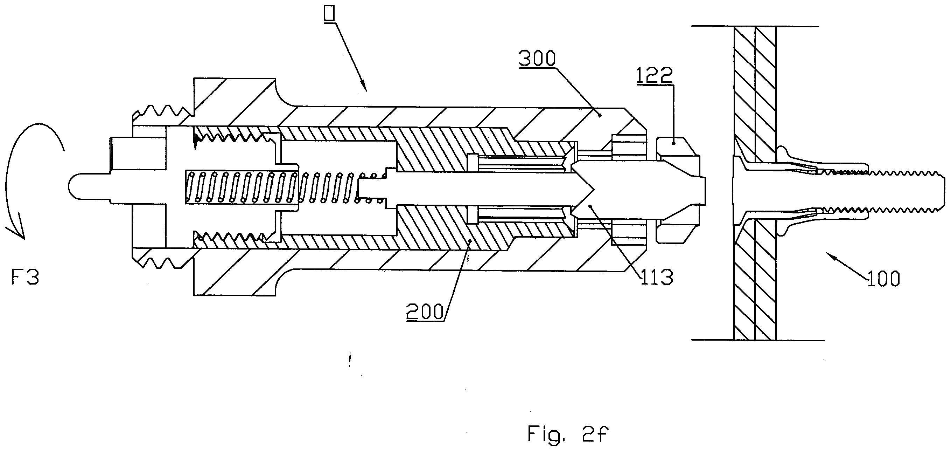

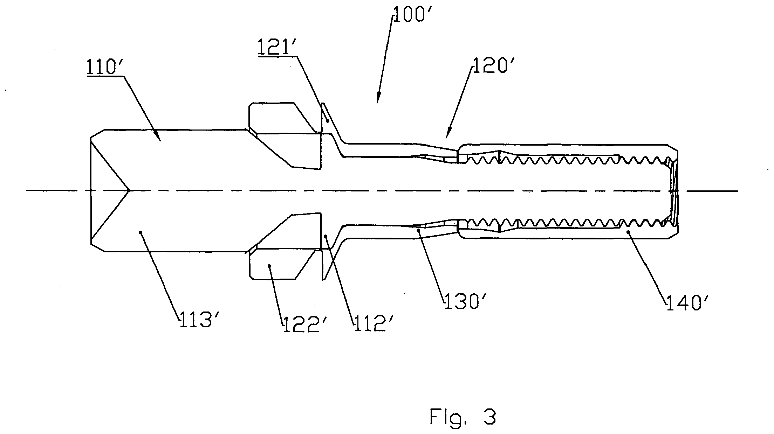

Comme illustrées sur le dessin de la figure 2f, les parties détachables 113 et 122 sont éjectées de l'outil O par l'éjecteur 320. Afin de faciliter cette éjection, la présente invention propose une fixation aveugle 100' illustrée par le dessin de la figure 3. Pour ce faire, la fixation aveugle référencée 100' adopte en regard de la fixation aveugle 100 ci-dessus décrite les différences suivantes :
- la portion détachable 113' de la tête 112' de la tige 110' est préformée de façon à former un appui axial de sorte que le mouvement en translation de l'éjecteur imprimé à la portion détachée 113' provoque un contact avec la portion détachable 122' de la tête 121' du corps externe 120'.

La portion détachable 113' présente une dimension supérieure à celle de l'âme creuse traversant le corps externe 120' de façon à garantir ledit contact.

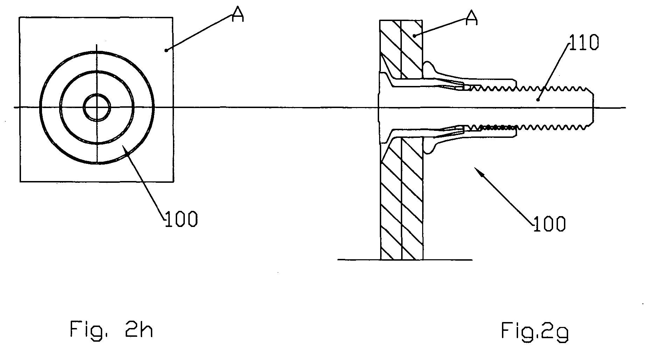

Comme illustrée sur les dessins des figures 2g et 2h, la fixation 100 présente une rupture nette une fois posée. L'empreinte aérodynamique est faible et un aspect cosmétique est sensiblement lisse. En effet, le reliquat des parties cassées ne dépasse pas 150 microns par rapport à la surface de l'assemblage A conformément aux objectifs de l'invention.
On comprend que l'outil et la fixation aveugle, qui viennent d'être ci-dessus décrits et représentés, l'ont été en vue d'une divulgation plutôt que d'une limitation. Bien entendu, divers aménagements, modifications et améliorations pourront être apportés aux exemples ci-dessus, sans pour autant sortir du cadre de l'invention.

## Revendications

1. Procédé de pose d'une fixation aveugle (100) comprenant une tige (110) sur laquelle est enfilé un corps externe (120),
le corps externe (120) comprenant une tête (121) et une portion détachable (122) reliée à ladite tête (121) au moyen d'une portion amincie (123) de corps externe (120),
le corps externe (120) comprenant une ou plusieurs parties,
ledit corps externe (120) comprenant une portion déformable à des fins de création d'un bulbe sous l'action de la tige (110),
la tige (110) comprenant une gorge de rupture (114) qui casse à partir d'un seuil de contrainte prédéfini,
le procédé de pose consistant à réaliser les opérations suivantes :
- positionnement de la fixation (100) dans un trou (T) traversant un assemblage,
- maintien de la fixation (100) dans le trou (T),
- création d'un bulbe à des fins de fixation de l'assemblage,
- rupture de la tige (110),
- rupture de la portion détachable (123) de la tête (121) du corps externe (120),
- entraîner sans à-coups la tige (110) à des fins de création du bulbe jusqu'à rupture de la tige (110) au niveau de la gorge de rupture (114) tout en retenant la portion détachable (122) de la tête (121) du corps externe (120), **caractérisé par le fait qu'**il comprend ensuite l'opération suivante:
- entraîner en rotation à choc en produisant un effort dynamique important dans un temps très court, en soumettant à au moins un impact dans un sens de rotation, la portion détachable (123) de la tête (121) du corps externe (120) pour exercer une contrainte en torsion à des fins de rupture de la portion amincie (123) du corps externe (120), la rupture résultant d'une bonne installation et l'absence de rupture résultant d'une mauvaise installation.

2. Procédé selon la revendication 1, **CARACTÉRISÉ PAR LE FAIT QUE** la création du bulbe jusqu'à rupture de la tige (110) au niveau de la gorge de rupture (114) tout en retenant la portion détachable (122) de la tête (121) du corps externe (120), est réalisée par entraînement en rotation sans à-coups de ladite tige (110).

3. Procédé selon la revendication 1 ou 2, **CARACTÉRISÉ PAR LE FAIT QUE** l'effort important est un effort correspondant à au moins deux fois l'effort nécessaire pour rompre la portion amincie de liaison (123) reliant la portion détachable (122) à la tête (121) du corps externe (120) et le temps très court est un temps inférieur à une seconde.

4. Outil de pose (O) permettant de mettre en œuvre le procédé selon l'une quelconque des revendications 1 à 3,
comprenant un organe de pose (200) coopérant avec ladite tige (110) et un organe de vérification de pose (300) coopérant avec ladite tête (121) du corps externe (120),
- l'organe de pose (200) ayant une action sur la tige (110) à des fins de création du bulbe jusqu'à rupture de la tige (110) au niveau de la gorge de rupture (114),
- l'organe de vérification de pose (300) retenant la portion détachable (122) de la tête (121) du corps externe (120) durant l'action de l'organe de pose (200) sur la tige (110),
**caractérisé en ce que**:
- l'organe de vérification de pose (300) comprend des moyens d'entraînement en rotation de type à choc afin de soumettre la portion détachable (122) de la tête (121) du corps externe (120) à une contrainte en torsion par la production d'un effort dynamique important produit dans un temps très court, c'est à dire en soumettant ladite portion détachable (122) de la tête (121) du corps externe (120) à au moins un impact dans un sens de rotation à des fins de rupture de la portion amincie (123) du corps externe (120), la rupture résultant d'une bonne installation et l'absence de rupture résultant d'une mauvaise installation.

5. Outil (O) selon la revendication 4, **CARACTÉRISÉ PAR LE FAIT QUE** l'organe de pose (200) assure une rotation de la tige (110) à des fins de création par vissage du bulbe jusqu'à rupture de la tige (110) au niveau de la gorge de rupture (114).

6. Outil (O) selon les revendications 4 et/ou 5, **CARACTÉRISÉ PAR LE FAIT qu'**il comprend un moteur électrique ou pneumatique pour la mise en mouvement de l'organe de pose (200).

7. Outil (O) selon les revendications 4 et/ou 5, **CARACTÉRISÉ PAR LE FAIT qu'**il comprend un moteur électrique ou pneumatique pour la mise en mouvement de l'organe de vérification de pose (300).

8. Outil (O) selon les revendications 4 et/ou 5, **CARACTÉRISÉ PAR LE FAIT QU'**il comprend un seul moteur entraînant l'organe de pose (200) et l'organe de vérification de pose (300) de manière distincte au moyen d'un sous-ensemble de réduction adapté.

9. Outil (O) selon les revendications 4 et/ou 5, **CARACTÉRISÉ PAR LE FAIT QUE** l'organe de pose (200) entraîne l'organe de vérification de pose (300) au moyen d'un sous-ensemble de réduction adapté.

10. Outil (O) selon les revendications 4 et/ou 5, **CARACTÉRISÉ PAR LE FAIT QUE** l'organe de vérification de pose (300) comprend un angle de rotation « dans le vide » qui est compris entre 60° et 240°.

11. Fixation aveugle (100) comprenant une tige (110) sur laquelle est enfilé un corps externe (120),
le corps externe (120) comprenant une tête (121) et une portion détachable (122) reliée à ladite tête (121) au moyen d'une portion amincie (123) de corps externe (120),
le corps externe (120) comprenant une ou plusieurs parties,
ledit corps externe (120) comprenant une portion déformable à des fins de création d'un bulbe sous l'action de la tige (110),
la tige (110) comprenant une tête (112) et une portion détachable (113) de la tête de tige reliée à ladite tête (112) par une gorge de rupture (114) qui casse à partir d'un seuil de contrainte prédéfini,
ladite portion amincie (123) du corps externe (120) reliant la portion détachable (122) à ladite tête (121) étant dimensionnée de façon à
- résister au contre-couple qu'elle subit lors de la création du bulbe par rotation de la tige (110) jusqu'à la rupture de la gorge de rupture (114) de la tige (110), et
- casser lors d'un entraînement à choc si la fixation (100) est bien installée,
**CARACTÉRISÉE PAR LE FAIT QUE** la portion détachable (113') de la tête (112) de la tige (110) est préformée de façon à former un appui axial de sorte qu'un mouvement en translation s'appliquant à la portion détachable (113') détachée de la tête (112') de tige (110') à des fins d'éjection, provoque un contact dudit appui axial avec la portion détachable (122') détachée de la tête (121') du corps externe (120') et de sa propre éjection.

## Patentansprüche

1. Verfahren zum Anbringen einer Blindbefestigung (100), umfassend eine Stange (110), auf die ein Außenkörper (120) aufgeschoben wird,
wobei der Außenkörper (120) einen Kopf (121) und einen abnehmbaren Abschnitt (122) aufweist, der mit dem Kopf (121) über einen verjüngten Abschnitt (123) des Außenkörpers (120) verbunden wird,
wobei der Außenkörper (120) einen oder mehrere Teile aufweist,
wobei der Außenkörper (120) einen Abschnitt aufweist, der unter der Einwirkung der Stange (110) verformbar ist, um eine Ausbauchung zu bilden,
wobei die Stange (110) eine Bruchnut (114) aufweist, die ab einem vorbestimmten Schwellwert bricht,
wobei das Verfahren zum Anbringen darin besteht, die folgenden Vorgänge auszuführen:
- Positionieren der Befestigung (100) in einem Loch (T), das eine Baugruppe durchquert,
- Halten der Befestigung (100) in dem Loch (T),
- Erstellen einer Ausbauchung, um die Baugruppe zu befestigen,
- Brechen der Stange (110),
- Brechen des abnehmbaren Abschnitts (123) des Kopfes (121) des Außenkörpers (120),
- ruckfreies Antreiben der Stange (110), um die Ausbauchung zu erstellen, bis die Stange (110) an der Bruchnut (114) bricht, während der abnehmbare Abschnitt (122) des Kopfes (121) des Außenkörpers (120) zurückgehalten wird, **dadurch gekennzeichnet, dass** es dann den folgenden Vorgang aufweist:
- Indrehungversetzen des abnehmbaren Abschnitts (122) des Kopfes (121) des Außenkörpers (120) mit einem Stoß durch Erzeugen einer großen dynamischen Beanspruchung in sehr kurzer Zeit durch mindestens einen Schlag in eine Drehrichtung, um eine Torsionsspannung zum Brechen des verjüngten Abschnitts (123) des Außenkörpers (120) auszuüben, wobei sich das Brechen aus einer ordnungsgemäßen Installation ergibt und sich das Nichterfolgen des Brechens aus einer unsachgemäßen Installation ergibt.

2. Verfahren nach Anspruch 1, **DADURCH GEKENNZEICHNET, DASS** das Erstellen der Ausbauchung bis zum Brechen der Stange (110) an der Bruchnut (114), während der abnehmbare Abschnitt (122) des Kopfes (121) des Außenkörpers (120) zurückgehalten wird, durch ruckfreies Indrehungversetzen der Stange (110) ausgeführt wird.

3. Verfahren nach Anspruch 1 oder 2, **DADURCH GEKENNZEICHNET, DASS** die große Beanspruchung eine Beanspruchung ist, die mindestens der zweifachen Beanspruchung entspricht, die notwendig ist, um den verjüngten Abschnitt (123) zu brechen, der den abnehmbaren Abschnitt (122) mit dem Kopf (121) des Außenkörpers (120) verbindet, und die sehr kurze Zeit eine Zeit von weniger als einer Sekunde ist.

4. Werkzeug zum Anbringen (O), das ermöglicht, das Verfahren nach einem der Ansprüche 1 bis 3 umzusetzen, umfassend ein Organ zum Anbringen (200), das mit der Stange (110) zusammenwirkt, und ein Organ zum Überprüfen des Anbringens (300), das mit dem Kopf (121) des Außenkörpers (120) zusammenwirkt,
- wobei Organ zum Anbringen (200) auf die Stange (110) einwirkt, um die Ausbauchung zu erstellen, bis die Stange (110) an der Bruchnut (114) bricht,
- wobei das Organ zum Überprüfen des Anbringens (300) den abnehmbaren Abschnitt (122) des Kopfes (121) des Außenkörpers (120) während der Einwirkung des Organs zum Anbringen (200) auf die Stange (110) zurückhält, **dadurch gekennzeichnet, dass**:
- das Organ zum Überprüfen des Anbringens (300) Mittel zum Indrehungversetzen des Typs mit einem Stoß aufweist, um den abnehmbaren Abschnitt (122) des Kopfes (121) des Außenkörpers (120) durch das Erzeugen einer großen dynamischen Beanspruchung in sehr kurzer Zeit einer Torsionsspannung zu unterwerfen, das heißt, indem der verjüngte Abschnitt (122) des Kopfes (121) des Außenkörpers (120) mindestens einem Schlag in eine Drehrichtung zum Brechen des verjüngten Abschnitts (123) des Außenkörpers (120) unterworfen wird, wobei sich das Brechen aus einer ordnungsgemäßen Installation ergibt und sich das Nichterfolgen des Brechens aus einer unsachgemäßen Installation ergibt.

5. Werkzeug (O) nach Anspruch 4, **DADURCH GEKENNZEICHNET, DASS** das Organ zum Anbringen (200) eine Drehung der Stange (110) zum Erstellen der Ausbauchung durch Schrauben gewährleistet, bis die Stange (110) an der Bruchnut (114) bricht.

6. Werkzeug (O) nach den Ansprüchen 4 und/oder 5, **DADURCH GEKENNZEICHNET, DASS** es einen Elektromotor oder einen pneumatischen Motor zum Inbewegungsetzen des Organs zum Anbringen (200) aufweist.

7. Werkzeug (O) nach den Ansprüchen 4 und/oder 5, **DADURCH GEKENNZEICHNET, DASS** es einen Elektromotor oder einen pneumatischen Motor zum Inbewegungsetzen des Organs zum Überprüfen des Anbringens (300) aufweist.

8. Werkzeug (O) nach den Ansprüchen 4 und/oder 5, **DADURCH GEKENNZEICHNET, DASS** es einen einzigen Motor aufweist, der das Organ zum Anbringen (200)und das Organ zum Überprüfen des Anbringens (300) mit Hilfe von einer geeigneten Untersetzungsgetriebe-Unterbaugruppe separat antreibt.

9. Werkzeug (O) nach den Ansprüchen 4 und/oder 5, **DADURCH GEKENNZEICHNET, DASS** das Organ zum Anbringen (200) das Organ zum Überprüfen des Anbringens (300) mit Hilfe von einer geeigneten Untersetzungsgetriebe-Unterbaugruppe antreibt.

10. Werkzeug (O) nach den Ansprüchen 4 und/oder 5, **DADURCH GEKENNZEICHNET, DASS** das Organ zum Überprüfen des Anbringens (300) einen Drehwinkel "im Leerraum" aufweist, der zwischen 60° und 240 ° beträgt.

11. Blindbefestigung (100), umfassend eine Stange (110), auf die ein Außenkörper (120) aufgeschoben ist,
wobei der Außenkörper (120) einen Kopf (121) und einen abnehmbaren Abschnitt (122) aufweist, der mit dem Kopf (121) über einen verjüngten Abschnitt (123) des Außenkörpers (120) verbunden ist,
wobei der Außenkörper (120) einen oder mehrere Teile aufweist,
wobei der Außenkörper (120) einen Abschnitt aufweist, der unter der Einwirkung der Stange (110) verformbar ist, um eine Ausbauchung zu bilden,
wobei die Stange (110) einen Kopf (112) und einen abnehmbaren Abschnitt (113) des Stangenkopfes aufweist, der mit dem Kopf (112) über eine Bruchnut (114) verbunden ist, die ab einem vorbestimmten Schwellwert bricht,
wobei der verjüngte Abschnitt (123) des Außenkörpers (120), der den abnehmbaren Abschnitt (113) mit dem Kopf (121) verbindet, derart dimensioniert ist, um
- dem Gegendrehmoment standzuhalten, dem er beim Erstellen der Ausbauchung durch Drehen der Stange (110) bis zum Brechen der Bruchnut (114) der Stange (110) ausgesetzt ist, und
- bei einem Indrehungversetzen mit einem Stoß zu brechen, wenn die Befestigung (100) ordnungsgemäß installiert ist,
**DADURCH GEKENNZEICHNET, DASS** der abnehmbare Abschnitt (113') des Kopfes (121) der Stange (110) derart vorgeformt ist, um eine axiale Auflage derart zu bilden, dass eine Translationsbewegung, die auf den abnehmbaren Abschnitt (113'), der von dem Kopf (112') der Stange (110') getrennt ist, zum Zwecke des Auswerfens ausgeübt wird, einen Kontakt der axialen Auflage mit dem abnehmbaren Abschnitt (122'), der von dem Kopf (121') des Außenkörpers (120') getrennt ist, und sein Auswerfen bewirkt.

## Claims

1. A method for setting a blind fastener (100) comprising a rod (110) onto which an outer body (120) is fitted,
The outer body (120) comprising a head (121) and a detachable portion (122) connected to said head (121) by means of a thinned portion (123) of the outer body (120),
The outer body (120) comprising one or more parts,
Said outer body (120) comprising a deformable portion for creating a bulb under the action of the rod (110),
The rod (110) comprising a rupture groove (114) which breaks from a predefined stress threshold,
The installation process involving carrying out the following operations:
- positioning of the fastener (100) in a hole (T) passing through an assembly,
- maintaining the fastener (100) in the hole (T),
- creating a bulb for fixing the assembly,
- rupture of the rod (110),
- rupture of the detachable portion (123) of the head (121) of the outer body (120),
- driving the rod (110) without jolts for creating the bulb until rupture of the rod (110) at the rupture groove (114) while retaining the detachable portion (122) of the head (121) of the outer body (120), **characterized in that** it further comprises the following operation:
- impact driving in rotation by producing a significant dynamic stress in a very short time, by subjecting to at least one impact in a direction of rotation, the detachable portion (123) of the head (121) of the outer body (120) in order to exert a torsional stress for rupture of the thinned portion (123) of the outer body (120), the rupture resulting from a proper installation and the absence of rupture resulting from an improper installation.

2. The method according to claim 1, **CHARACTERIZED BY** THE FACT THAT the creation of the bulb until rupture of the rod (110) at the rupture groove (114) while retaining the detachable portion (122) of the head (121) of the outer body (120), is carried out by driving said rod (110) in rotation without jolts.

3. The method according to claim 1 or 2, **CHARACTERIZED BY** THE FACT THAT the significant stress is a stress corresponding to at least two times the stress necessary to break the thinned connecting portion (123) connecting the detachable portion (122) to the head (121) of the outer body (120) and the very short time is a time of less than one second.

4. A setting tool (O) for implementing the method according to any one of claims 1 to 3, comprising a setting member (200) cooperating with said rod (110) and an setting verification member (300) cooperating with said head (121) of the outer body (120),
- The setting member (200) having an action on the rod (110) for creating the bulb until the rupture of the rod (110) at the rupture groove (114),
- The setting verification member (300) retaining the detachable portion (122) of the head (121) of the outer body (120) during the action of the setting member (200) on the rod (110), **characterized in that**:
- The setting verification member (300) comprises shock-type rotary drive means in order to subject the detachable portion (122) of the head (121) of the outer body (120) to a torsional stress by the production of a significant dynamic stress produced in a very short time, that is to say by subjecting said detachable portion (122) of the head (121) of the outer body (120) to at least one impact in a direction of rotation for the rupture of the thinned portion (123) of the outer body (120), the rupture resulting from proper setting and the absence of rupture resulting from an improper setting.

5. The tool (O) according to claim 4, **CHARACTERIZED IN THAT** the setting member (200) ensures the rotation of the rod (110) for creating the bulb by screwing until the rupture of the rod (110) at the rupture groove (114).

6. The tool (O) according to claims 4 and/or 5, **CHARACTERIZED BY** THE FACT that it comprises an electric orpneumatic motor for putting the setting member (200) in motion.

7. The tool (O) according to claims 4 and/or 5, **CHARACTERIZED BY** THE FACT that it comprises an electric or pneumatic motor for putting the setting verification member (300) in motion.

8. The tool (O) according to claims 4 and/or 5, **CHARACTERIZED BY** THE FACT THAT it comprises a single motor driving the setting member (200) and the setting verification member (300) in a distinct manner by means of a suitable reduction sub-assembly.

9. The tool (O) according to claims 4 and/or 5, **CHARACTERIZED IN THAT** the setting member (200) drives the setting verification member (300) by means of a suitable reduction sub-assembly.

10. The tool (O) according to claims 4 and/or 5, **CHARACTERIZED IN THAT** the setting verification member (300) comprises an angle of "free" rotation that is between 60° and 240°.

11. A blind fastener (100) comprising a rod (110) onto which an outer body (120) is fitted,
The outer body (120) comprising a head (121) and a detachable portion (122) connected to said head (121) by means of a thinned portion (123) of the outer body (120),
The outer body (120) comprising one or more parts,
Said outer body (120) comprising a deformable portion for creating a bulb under the action of the rod (110),
The rod (110) comprising a head (112) and a detachable portion (113) of the rod head connected to said head (112) by a rupture groove (114) which breaks from a predefined stress threshold,
Said thinned portion (123) of the outer body (120) connecting the detachable portion (122) to said head (121) being dimensioned in such a way to
- resist the counter-torque that it undergoes during the creation of the bulb by rotation of the rod (110) until the rupture of the rupture groove (114) of the rod (110), and
- break during an impact driving if the fastener (100) is properly installed,
**CHARACTERIZED BY** THE FACT THAT the detachable portion (113') of the head (112) of the rod (110) is preformed in such a way as to form an axial support so that a movement in translation applied to the detachable portion (113') detached from the head (112') of the rod (110') for ejection, causes a contact of said axial support with the detachable portion (122') detached from the head (121') of the outer body (120') and its own ejection.
